# EUROPEAN PATENT APPLICATION

(11) **EP 3 611 664 A1**
(43) Date of publication of application: **19.02.2020**
(21) Application number: 18189225.8
(22) Date of filing: 16.08.2018
(51) Int. Cl.: G06K 9/62

(54) **SYSTEM FOR OPTICAL CHARACTER RECOGNITION (OCR)**

(71) Applicant: CCS Content Conversion Specialists GmbH, 22083 Hamburg (DE)
(72) Inventor: Dr. Schreiber, Gerald, 21465 Wentorf (DE); Bauer, Joachim, 22959 Linau (DE); Dinu, Ciprian, 011494 Bucharest (RO); Kolodziej, Richard, 21109 Hamburg (DE); Lissowski, Thomas, 59329 Wadersloh (DE)
(74) Representative: 2K Patentanwälte Blasberg Kewitz & Reichel

(57) **Abstract**

A system (1) for optical character recognition (OCR) from an image containing text shall minimize transcription errors and improve the quality of the resulting machine-encoded text. To this end, the system comprises:
- a text area dispatcher module (6), connected to a collection (8) of OCR engines (aTR1, aTR2,...aTRn), and configured to allocate said image as input to a plurality of said OCR engines (aTR1, aTR2,...aTRn) and receive machine-encoded texts as output from each of said plurality of said OCR engines (aTR1, aTR2,...aTRn), and
- an OCR validation engine module (10), configured to receive said machine-encoded texts and assign a confidence level to each of said machine-encoded texts,
wherein said text area dispatcher module (6) is further configured to receive said confidence levels from the OCR validation engine module (10), wherein said plurality of said OCR engines (aTR1, aTR2,...aTRn) is a proper subset of said collection (8) of OCR engines (aTR1, aTR2,...aTRn), and wherein said text area dispatcher module (6) is further configured to choose said plurality of said OCR engines (aTR1, aTR2,...aTRn) based on previously received confidence levels.

## Description

The invention concerns a system for optical character recognition (OCR) from an image containing text.

Optical character recognition (also optical character reader, OCR) is the mechanical or electronic conversion of images of typed, handwritten or printed text into machine-encoded text, whether from a scanned document, a photo of a document, a scene-photo (for example the text on signs and billboards in a landscape photo) or from subtitle text superimposed on an image (for example from a television broadcast).

OCR is a common method of digitizing printed texts so that they can be electronically edited, searched, stored more compactly, displayed on-line, and used in machine processes such as cognitive computing, machine translation, (extracted) text-to-speech, key data and text mining. OCR is a field of research in pattern recognition, artificial intelligence and computer vision.

Current OCR systems are capable of producing a high degree of recognition accuracy for most fonts, and support for a variety of digital image file format inputs. Some systems are capable of reproducing formatted output that closely approximates the original page including images, columns, and other non-textual components.

While the technology has greatly advanced in recent years, transcription errors are nonetheless still unavoidable. This is true especially in cases of exotic fonts, or poor quality of scans. Handwriting can only be processed by OCR with some limitations, involving high training efforts and high error rates. Transcription errors are sometimes simply accepted, because manual correction is a tedious, time consuming and expensive task.

It is therefore the object of the present invention to provide a system for optical character recognition from an image containing text which minimizes transcription errors and improves the quality of the resulting machine-encoded text.

This object is inventively solved by the system comprising:
- a text area dispatcher module, connected to a collection of OCR engines, and configured to allocate said image as input to a plurality of said OCR engines and receive machine-encoded texts as output from each of said plurality of said OCR engines, and
- an OCR validation engine module, configured to receive said machine-encoded texts and assign a confidence level to each of said machine-encoded texts,
wherein said text area dispatcher module is further configured to receive said confidence levels from the OCR validation engine module, wherein said plurality of said OCR engines is a proper subset of said collection of OCR engines, and wherein said text area dispatcher module is further configured to choose said plurality of said OCR engines based on previously received confidence levels.

The invention is based on the idea that in recent years, a number of OCR engines were being tweaked to better deal with specific types of input such as particular fonts, languages or layouts. Furthermore, highly specialized systems exist for niche applications such as license plates, invoices, screenshots, ID cards, driver licenses, etc. Thus, there exists a plurality of OCR engines which each have their advantages and disadvantages regarding specific types of input. Thus, in order to increase the quality of transcription, as system should not work with only one of these OCR engines, but be connected to a whole collection of such OCR engines to which it sends images and receives the transcribed text. Furthermore, the inventors have recognized that OCR engines typically provide a confidence level for the recognized machine-encoded texts, which can be used to assign such confidence level to the receive texts. In order to optimize the entire transcription process in terms of efficiency, the received confidence levels should then be used to select a proper subset, i.e. just part of the connected OCR engines for future transcription based on the received confidence levels. In other words: An OCR validation engine module of the system employs a self-learning algorithm (e.g. neural networks) to gradually improve the allocation to OCR engines by evaluation previous results for transcriptions.

Advantageously, the system further comprises a text area pre-processor module configured to assign a number of attributes to said image, wherein said text area dispatcher module is further configured to choose said plurality of said OCR engines based on said attributes and/or a set of stored properties associated which each OCR engine. That is, a pre-analysis of the text is performed which assigns attributes relating to the type, style, language, layout etc. of the text in the image. In addition, properties of each OCR engine regarding for which type, style, language, layout etc. of text it is particularly suited are stored in the system. Thus, based on the pre-analysis, the system can rule out unsuited OCR engines and choose OCR engines particularly suited for the current image.

To this end, said text area dispatcher module is advantageously further configured to choose said plurality of said OCR engines if a previous allocation of an image with comparable attributes yielded a confidence level above a predetermined threshold. In other words: images are allocated to such OCR engines that previously yielded good results for comparable images, i.e. images with similar attributes.

Advantageously, said attributes comprise a font and/or a language and/or a layout of the text contained in said image.

In a further advantageous embodiment of the system, said text area pre-processor module is further configured to create a plurality of said images from an input file, wherein said input file is split into different areas with different characteristics. Such is particularly advantageous when the layout of said image comprises parts with different characteristics which should thus be allocated to different OCR engines (i.e. are associated with different attributes).

In addition, such an embodiment can also be used to determine the best OCR engines based on the entire input file. To this end, the text area dispatcher module is advantageously further configured to choose said plurality of said OCR engines based on an attribute assigned to another image from the same input file. For example, a certain image (not even containing text) can be used to identify a certain input file as pertaining to a particular application, and this can be used to choose the optimal OCR engines for the remaining images from said input file.

In a further advantageous embodiment, the system comprises a dictionary module, wherein the OCR validation engine module is further configured to verify a machine-encoded text in the dictionary module and increase said confidence level if the machine-encoded text was verified. While OCR engines often comprise such dictionary modules, a central dictionary module within the above described system can be used for a number of additional purposes, e.g. a change in the confidence level to increase the performance of the self-learning algorithm.

Advantageously, the OCR validation engine module is further configured to update the dictionary module if a machine-encoded text has a confidence level above a predetermined threshold. This is a further advantage of a separate dictionary module: If the confidence level of the resulting machine-encoded text is sufficiently high, the system will judge that the transcription is correct. Thus, the dictionary can be automatically updated and becomes self-learning.

In another advantageous embodiment, the OCR validation engine module is further configured to receive, from a single OCR engine, a plurality of machine-encoded texts for a single image together with a confidence level assigned to each of the machine-encoded texts, to combine the confidence levels of a plurality of OCR engines for each machine-encoded text, and to choose the machine-encoded text with the highest combined confidence level for further processing. A such embodiment takes advantage of the fact that certain OCR engines output a plurality of possible transcriptions for a certain image, each assigned with a confidence level. The system then uses a weighting mechanism which combines all confidence levels of all OCR engines in order to obtain the most probable correct result.

However, even with the system above, automatic OCR transcription may still contain errors and thus, manual correction may still be necessary. To this end, the system advantageously comprises a text information management system module configured to segment said image and said machine-encoded text into pairs of corresponding image segments and text segments, to assign said pairs to a plurality of users for review, and to receive corrected text segments from said users. The segments are advantageously on sentence-level, i.e. the image and the resulting machine-encoded text are segmented into sentences, i.e. a pair of an image showing the sentence and the corresponding machine-encoded sentence is formed. Such pairs are then allocated to users for manual review and/or correction.

In an embodiment comprising a dictionary module, the resulting correction can be re-checked in the dictionary to improve quality. To this end, the text information management system module is advantageously further configured to verify said corrected text segments in the dictionary module. If the text cannot be verified, the pair can again be sent to another user for another review.

If a text segment has been reviewed manually, its quality will is checked and thus improved. To acknowledge this fact, the text information management system module is advantageously further configured to increase the confidence level of said corrected text segment. This corrected confidence level will then be used in the above-described self-learning and evaluation mechanisms.

In a further advantageous embodiment, the OCR validation engine module is further configured to update said set of stored properties associated which each OCR engine based on said review. In other words: If a user has verified the result from a specific OCR engine of a text with particular attributes, in can be judged that this OCR engine is particularly suited for texts with these attributes and this information is used in the system to update the stored properties of each OCR engine. Thus, the system also learns which OCR engines are suited for which texts based on the manual review.

A computer program product is advantageously loadable in the memory of at least one computer and includes software code portions which cause said computer to perform the function of a system as described above.

The advantages of the invention particularly comprise the fact that by spreading an automated task, namely OCR transcription over several systems and/or individuals, errors produced by single systems can be eliminated and a confidence level of the resulting vote can be deducted. The quality of the transcription is increased.

Embodiments of the invention are further described in reference to the drawings, in which the single

FIG shows a schematic diagram of an exemplary system for optical character recognition.

The diagram depicted in the FIG shows a system for optical character recognition 1 which applies a dynamic mixture of automated and manual transcription. The modules of the system 1 are realized via computer processing, i.e. they represent modules of a computer program that is loaded into the memory of one or more hardware devices so that the hardware device performs the automated steps described in regard to each module of the system 1. The hardware can be localized or distributed, stationary or mobile, or even realized as a cloud-based system.

Regarding the system 1, the input is received in the form of a scanned text document. Common file formats would be pdf, jpg, tiff, jp2, etc. Text scanning is an industry standard procedure and outside of the scope of this description. The skilled artist will know how to perform scanning in order to obtain digital graphical representations of documents in the abovementioned or other graphics file formats.

In a first step of text recognition, a pre-analysis is conducted in a text area analyzer (TAA) module 2. The TAA module 2 generates attributes relating to the entire document as well as parts of the document. Attributes related to the entire document include e.g. the document type (Book, newspaper, etc.). Furthermore, the TAA module 2 performs a document segmentation, i.e. it splits the image of the page into different areas with different characteristics including: texts areas, illustration areas, mathematical/chemical formula areas, handwritten text areas, etc. These characteristics are represented as attributes and are attached to the individual areas as metadata.

In alternative embodiments, the TAA module 2 is implemented as a combination between automatic analyze and manual (human) quality assurance and correction. I.e. the TAA module 2 is designed for human interaction over a user interface in order to improve the quality of the analysis performed by the TAA module 2. Such is advantageous in case of very heterogeneous layouts (e.g. front page of tabloids) or poor scan quality (e.g. old micro fiches).

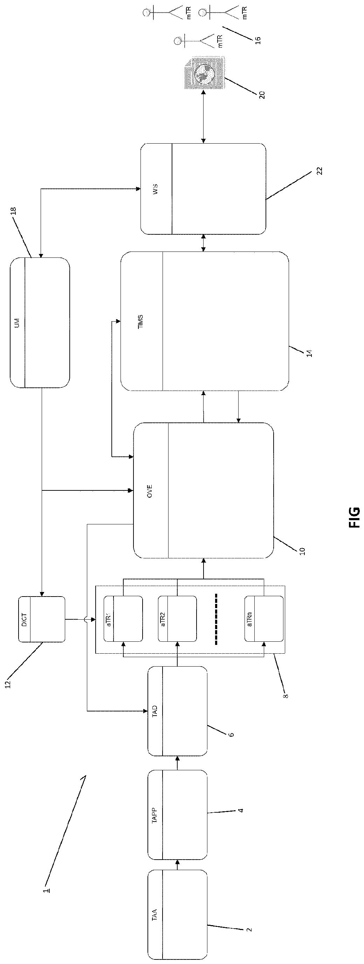

In the embodiment shown in the figure, a subsequent text area pre-processor (TAPP) module 4 is deployed to filter and preprocess areas identified in the TAA module 2 as containing text information. Such preprocessing may include image enhancements, contrast adjustment, or binarization and improves the quality of text recognition. However, the TAPP module 4 is optional and may not be present in other embodiments.

A subsequent Text area dispatcher (TAD) module 6 then employs optical character recognition (OCR) engines in order to transcribe the text contained in the text areas. To this end, the TAD module 6 chooses, for each text area, one automated system for optical character recognition (aTR1, aTR2,...aTRn) from a collection of OCR engines 8. To this end, the image areas and metadata of the respective documents are used by the TAD module 6 for optimized allocation of the transcription to the subsequent automated systems for optical character recognition (aTR1, aTR2,...aTRn). The TAD module deploys a self-learning algorithm (e.g. neural networks) to gradually improve the allocation based on previous individual aTR results.

The aTR engines are different industry grade OCR engines. On the market there are several systems available covering a broad scope of fonts, languages and layouts (e.g. Tesseract, ABBYY Fine Reader). Other systems have been developed for very specific input, e.g. Chinese, Arabic, Medieval Latin, etc. Typically, the ORC products are complex systems in itself with their own inherent strengths and weaknesses. Hence, the processing of the same input by different systems will typically not result in identical output.

After text recognition has taken place in one or more OCR engines from the collection 8, an OCR validation engine (OVE) module 10 receives and evaluates the results. The evaluation is done in two steps described in the following.

In an assessment step by OVE module 10, the quality of the transcription (either created from from the aTR systems from the collection 8 described above, or from mTR described below) is assessed based on dictionary search performed in a dictionary (DICT) module 12 and confidence information provided by the different aTR systems. Typically, such aTR systems supply a confidence indication together with the transcription result. Confidence indications by individual aTRs are normalized in the OVE module 10 using a common reference system for the resulting confidence level. Transcriptions are additionally verified by a dictionary search in dictionary module 12. The confidence levels of transcriptions with a dictionary match are increased.

The OVE module 10 selects the transcription with the best assessment for the second step of validation. Based on their respective confidence level, transcriptions are accepted or labeled for post processing.

In an alternative embodiment, the OVE module 10 uses so-called alternative words voting which is provided by some aTR implementations. In this case, an aTR provides several possible transcriptions for a word with individual confidence levels. The OVE module 10 combines results from multiple aTRs, choosing the option with best combined confidence. All word voting by individual aTRs and alternative word voting (where available) is processed and confidence levels are calculated. The transcription with the highest combined confidence level is then considered for acceptance or post processing.

In a further alternative embodiment of the system 1, transcriptions with satisfactory confidence are randomly selected by the OVE module 10 for post processing to increase overall quality and foster the self-learning. The random selection may be weighted with the confidence level, to prefer transcriptions with just-above-threshold confidence level for post processing.

In a further alternative embodiment of OVE module 10 and DICT module 12, the OVE module 10 is updating the dictionary or dictionaries (DICT) with new words based on transcriptions with very high confidence level. In a further alternative embodiment, updated dictionaries are supplied to the aTR engines to improve aTR performance.

The OVE module 10 rates the individual performance of the aTRs in relation to the text attributes contained in the metadata (e.g. language, font type). OVE module 10 provides such ratings to the TAD module 6 to improve the allocation decision. For example, in a case where five different aTRs are available, and voting is always selecting between only three aTRs and regularly discarding the results of the other two aTRs, the TAD module 6 will subsequently allocate the task to the aforementioned best suitable three aTRs for a particular language/font based on the previous rating.

Transcriptions labeled for manual post processing are provided to a Text information management system (TIMS) module 14. The original image and the transcription results are segmented, typically on sentence level. A corresponding pair consisting of an image segment and a transcription segment form a task for post processing. All tasks created from several transcriptions are processed in random order, to prevent recompilation of larger text segments by mTRs (manual text recognizers) in a group 16.

The TIMS module 14 assigns the abovementioned tasks to mTRs (i.e. persons) based on their profile stored in a user management (UM) module 18. Profiles may contain information about language levels, the ability to read special font types, preferred working hours and quality rating (where legally permissible). These mTR users in the exemplary embodiment use a web interface 20 provided by a web server (WS) module 22 to see the image contained in a task and the transcription result. Transcription results are affirmed or corrected by the mTR. The persons in group 16 involved in manual correction process (mTR) may be volunteers or receive a financial reward for their work.

In exemplary embodiments, the mTRs are working mobile, e.g. from home, while travelling or to use short periods of idle time. A batch of phrases are deployed per mTR and stored locally in a mobile app while connectivity is available. An mTR may work on the transcription of the complete batch in an offline environment. The results are sent to the TIMS module 14 once connectivity is available again. This variant allows to widen the scope of persons working as mTRs to regions with less developed infrastructure.

The TIMS module 14 collects the results from mTRs via WS module 22 and applies a dictionary search in the DICT module 12 to assess corrections provided by mTRs. Based on the results of the dictionary search, the user profile data from the UM module 18 and the previous confidence level from the OVE module 10, a new confidence level is derived. The TIMS module 14 reschedules tasks with unsatisfactory confidence levels for further post processing by additional mTRs until a satisfactory confidence level is reached.

In an alternative embodiment, tasks are initially assigned to multiple mTRs to allow improved assessment by comparing results of multiple mTR corrections.

Once a satisfactory confidence level for a task is reached, the TIMS module 14 provides feedback to the UM module 18 regarding which mTRs have provided correct or incorrect transcriptions. The UM module 18 then updates the quality level in the respective mTR profile to improve future task assignments and task assessments by the TIMS module 14. The TIMS module then reassembles tasks back into the original context of a transcription.

In an alternative embodiment, the UM module 18 uses the feedback provided by the TIMS module 14 to calculate rewards for the users (mTR) in the group 16.

### List of reference signs

- 1: System for optical character recognition
- 2: Text area analyzer module
- 4: Text area pre-processor module
- 6: Text area dispatcher module
- 8: Collection of optical character recognition engines
- 10: OCR validation engine module
- 12: Dictionary module
- 14: Text information management system module
- 16: Group of manual translators
- 18: User management module
- 20: Web interface
- 22: Web server module

## Claims

1. A system (1) for optical character recognition (OCR) from an image containing text, comprising:
- a text area dispatcher module (6), connected to a collection (8) of OCR engines (aTR1, aTR2,...aTRn), and configured to allocate said image as input to a plurality of said OCR engines (aTR1, aTR2,...aTRn) and receive machine-encoded texts as output from each of said plurality of said OCR engines (aTR1, aTR2,...aTRn), and
- an OCR validation engine module (10), configured to receive said machine-encoded texts and assign a confidence level to each of said machine-encoded texts, wherein said text area dispatcher module (6) is further configured to receive said confidence levels from the OCR validation engine module (10), wherein said plurality of said OCR engines (aTR1, aTR2,...aTRn) is a proper subset of said collection (8) of OCR engines (aTR1, aTR2,...aTRn), and wherein said text area dispatcher module (6) is further configured to choose said plurality of said OCR engines (aTR1, aTR2,...aTRn) based on previously received confidence levels.

2. The system (1) of claim 1, further comprising a text area pre-processor module (4) configured to assign a number of attributes to said image, wherein said text area dispatcher module (6) is further configured to choose said plurality of said OCR engines (aTR1, aTR2,...aTRn) based on said attributes and/or a set of stored properties associated which each OCR engine (aTR1, aTR2,...aTRn).

3. The system (1) of claim 2, wherein said text area dispatcher module (6) is further configured to choose said plurality of said OCR engines (aTR1, aTR2,...aTRn) if a previous allocation of an image with comparable attributes yielded a confidence level above a predetermined threshold.

4. The system (1) of claim 2 or 3, wherein said attributes comprise a font and/or a language and/or a layout of the text contained in said image.

5. The system (1) of one of claims 2 to 4, wherein said text area pre-processor module (4) is further configured to create a plurality of said images from an input file, wherein said input file is split into different areas with different characteristics.

6. The system (1) of claim 5, wherein said text area dispatcher module (6) is further configured to choose said plurality of said OCR engines (aTR1, aTR2,...aTRn) based on an attribute assigned to another image from the same input file.

7. The system (1) of one of the preceding claims, further comprising a dictionary module (12), wherein the OCR validation engine module (10) is further configured to verify a machine-encoded text in the dictionary module (12) and increase said confidence level if the machine-encoded text was verified.

8. The system (1) of claim 7, wherein the OCR validation engine module (10) is further configured to update the dictionary module (12) if a machine-encoded text has a confidence level above a predetermined threshold.

9. The system (1) of one of the preceding claims, wherein the OCR validation engine module (10) is further configured to receive, from a single OCR engine (aTR1, aTR2,...aTRn), a plurality of machine-encoded texts for a single image together with a confidence level assigned to each of the machine-encoded texts, to combine the confidence levels of a plurality of OCR engines (aTR1, aTR2,...aTRn) for each machine-encoded text, and to choose the machine-encoded text with the highest combined confidence level for further processing.

10. The system (1) of one of the preceding claims, further comprising a text information management system module (14) configured to segment said image and said machine-encoded text into pairs of corresponding image segments and text segments, to assign said pairs to a plurality of users for review, and to receive corrected text segments from said users.

11. The system (1) of claim 10, further comprising a dictionary module (12), wherein the text information management system module (14) is further configured to verify said corrected text segments in the dictionary module (12).

12. The system (1) of claim 10 or 11, wherein the text information management system module (14) is further configured to increase the confidence level of said corrected text segment.

13. The system (1) of claim 2 and one of claims 10 to 12, wherein the OCR validation engine module (10) is further configured to update said set of stored properties associated which each OCR engine (aTR1, aTR2,...aTRn) based on said review.

14. A computer program product loadable in the memory of at least one computer and including software code portions which cause said computer to perform the function of a system (1) of any of the preceding claims.
